Europäisches Patentamt

European Patent Office

Office européen des brevets

(11) Veröffentlichungsnummer: **0 166 721**
**B1**

(12) **EUROPÄISCHE PATENTSCHRIFT**

(45) Veröffentlichungstag der Patentschrift:
**20.11.86**

(51) Int. Cl.⁴: **F 16 H 45/02**

(21) Anmeldenummer: **84900280.3**

(22) Anmeldetag: **21.12.83**

(86) Internationale Anmeldenummer:
**PCT/EP 83/00344**

(87) Internationale Veröffentlichungsnummer:
**WO 84/03340 (30.08.84 Gazette 84/21)**

(54) **STEUEREINRICHTUNG FÜR EINE WANDLERSCHALTKUPPLUNG.**

(30) Priorität: **22.02.83 DE 3306000**

(43) Veröffentlichungstag der Anmeldung:
**08.01.86 Patentblatt 86/2**

(45) Bekanntmachung des Hinweises auf die Patenterteilung:
**20.11.86 Patentblatt 86/47**

(84) Benannte Vertragsstaaten:
**DE FR GB SE**

(56) Entgegenhaltungen:
**EP - A - 0 029 290**
**EP - A - 0 044 487**
**DE - A - 2 301 364**
**DE - B - 1 164 786**
**FR - A - 2 422 083**
**GB - A - 2 081 413**

**Firmen-Druckschrift F1/13 ZFF747, 510 ZF-Transmatik,
Okt. 1974, S. 12-15.**

(73) Patentinhaber: **ZAHNRADFABRIK FRIEDRICHSHAFEN
AKTIENGESELLSCHAFT, Löwentaler
Strasse 100 Postfach 2520,
D-7990 Friedrichshafen 1 (DE)**

(72) Erfinder: **MAGG, Alfred, Albrechtstr. 57,
D-7990 Friedrichshafen (DE)**
Erfinder: **BOSS, Franz, Bachstr. 8/1, D-7990 Kressbronn
(DE)**
Erfinder: **BIEBER, Gerold, Mühlengärten,
D-7994 Langenargen (DE)**

(74) Vertreter: **Raue, Reimund, Zahnradfabrik
Friedrichshafen AG Löwentaler
Strasse 100 Postfach 2520,
D-7990 Friedrichshafen 1 (DE)**

# Beschreibung

Diese Erfindung betrifft eine Steuereinrichtung für eine Wandlerschaltkupplung nach dem Oberbegriff von Anspruch 1, wobei die Gangschaltkupplungen im Schaltgetriebe vorrangig mit Synchronisiereinrichtungen versehen sind.

Solche Steuereinrichtungen sind z. B. aus der Beschreibung ZF-Transmatik vom Oktober 1974, Seiten 12 bis 15, Abbildung 11 bis 15, in verschiedenen Ausführungen und in Kombinationen mit verschiedenen Schaltgetrieben bekannt und haben sich auch praktisch gut bewährt. Der Herstellaufwand für eine solche Steuerung ist, wie insbesondere aus der Abbildung 11 zu ersehen ist, jedoch sehr hoch, weil allein die Erfassung von zwei Drehzahlen — Motor- und Turbinen- oder Getriebedrehzahlen — über Induktivgeber nötig und deren Verarbeitung elektronisch — siehe DE-PS 23 01 364 — notwendig ist. Weiter erfolgt über einen Ölkreislauf die Befüllung des Wandlers und die Steuerung der Wandlerkupplung, während ein Druckluftkreislauf als Servoeinrichtung für die Schaltkupplungsbetätigung nötig ist, wobei der Geberzylinder der Kupplung auch noch über einen Bremsflüssigkeitskreis mit dem Arbeitszylinder und dem Steuerventil des Servogerätes verbunden sein muss. Durch diese Einrichtungen und durch die noch nötigen elektrischen Verknüpfungen und Sicherungen, wie aus dieser Abbildung zu ersehen ist, ergeben sich hohe Herstell- und auch Betriebskosten.

Es ist deshalb Aufgabe der Erfindung, eine Steuereinrichtung nach dem Oberbegriff von Anspruch 1 zu vereinfachen, so dass sich ein geringerer Herstell- und Betriebskostenaufwand ergibt und die Wirtschaftlichkeit sich dadurch erhöht, ohne dass praktisch spürbare Verschlechterungen im Zusammenhang mit der Funktion einer solchen Wandlerschaltkupplung auftreten.

Diese Aufgabe wird mit den kennzeichnenden Merkmalen von Anspruch 1 erfüllt.

Während nach dem Stand der Technik neben dem Drucköl noch ein Druckluft- und Bremsflüssigkeitskreislauf und eine umfangreiche elektrische und elektronische Anlage nötig ist, vereinfacht sich die elektrische Anlage erheblich und mit dem mehrmals wirkenden, immer gleichen Systemdruck erfolgt, ergänzt von einem in sehr einfacher Weise über ein Pitot-Rohr erzeugten turbinendrehzahlabhängigen Druck in einem Wandlerkupplungsventil, die Auswertung zur Steuerung der Wandlerkupplung. Alle Magnetventile — Schaltventile — für die Zuschaltung des Systemdruckes oder für die Entlüftung werden dabei in einfacher Weise im Zusammenhang mit der Gashebel-, Motorbremshebel- bzw. Ganghebelverstellung betätigt. Die Öffnung der Wandlerkupplung bei jeder Schaltung wird in Abhängigkeit von der Betätigung der Schaltkupplung mit dem gleichen Systemdruck und mit den gleichen Schaltmitteln herbeigeführt. Auch die notwendige Schliessung der Wandlerkupplung bei jeder Betätigung der Motorbremse wird von dem Wandlerkupplungsventil, was vorrangig für die drehzahlabhängige Steuerung der Wandlerkupplung bestimmt ist, miterledigt. Besonders vorteilhaft ist auch, dass der Drehmomentwandler bei geschlossener Wandlerkupplung nicht mehr vom Druckmittel durchströmt wird, weil damit Verluste im Wandler weitestgehend vermieden werden.

In den Ansprüchen 2 bis 13 wird die Erfindung besonders vorteilhaft ausgestaltet.

In der einfachen Ausgestaltung des Wandlerkupplungsventils nach Anspruch 2 werden allein über die Gestaltung des Kolbens mit zwei Kolben und mehreren Ringflächen in Verbindung mit Ringräumen und Steuerkanten und nur einer Druckfeder die unterschiedlichen Schaltpunkte drehzahl- und fahrzustandsabhängig für das Schliessen und Öffnen der Schaltkupplung realisiert, wobei auch noch z. B. die Motorbremssicherung miterfolgt. Besonders vorteilhaft ist die Wirkung des Systemdruckes im fünften Ringraum, wenn bei Drehzahlsteigerung im Zugbetrieb der Pitot-Rohrdruck den Kolben gegen den Federdruck so weit, z. B. nach rechts, verschoben hat, dass neben der Schliessung der Wandlerkupplung durch die Verbindung mit dem vierten Ringraum auf die Differenzringfläche des Kolbens noch ein der Feder entgegenwirkender Druck wirksam wird, der einen Halteeffekt bewirkt und z. B. den Umschaltpunkt im Zugbetrieb bei Drehzahlabfall am Berg zu einer geringeren Drehzahl hin verschiebt.

Mit der Ausgestaltung der Zuleitung zur Wandlerkupplung nach Anspruch 3 wird nicht nur eine relativ weiche Wandlerüberbrückung, sondern auch eine schnelle Entlüftung der Wandlerkupplung erzielt.

Die konkrete Ausgestaltung des Wandlerkupplungsventiles in Verbindung mit dem Magnet- und Schaltventil für die Zuschaltung der Schaltkupplung nach Anspruch 4 und mit dem Motorbremsschaltventil nach Anspruch 5 bringen eine sehr einfache Lösung bei voller Funktionsfähigkeit.

Durch das Gashebelschaltventil in Verbindung mit der Kolbengestaltung im Bereich des zweiten Ringraumes vom Wandlerkupplungsventil nach Anspruch 6 kann in einfache Weise durch die Wirkung des Systemdruckes in Verbindung mit einer Ringfläche dem Federdruck entgegengewirkt werden, so dass z. B. in der Leerlaufstellung — kein Gas, sondern Schub — die Öffnung der Wandlerschaltkupplung bei einer geringeren Motordrehzahl erfolgt als deren Schliessung im Zugbetrieb, wenn nur der Pitot-Druck der Druckfeder entgegenwirkt.

Die konstruktive Ausgestaltung der Steuerung nach Anspruch 7 bewirkt mit dem Systemdruckventil die einfache Aufteilung des Druckmittels für den gemeinsamen Systemdruck-, Kühl- und Schmiermittel- wie Wandlerkreislauf.

Bei geschlossener Wandlerkupplung wird im Drehmomentwandler nur ein bestimmter Bereitschaftsdruck über das Druckhalteventil auch bei Leckage oder Abfluss in die Pitot-Einrichtung gehalten, so dass keine Umschaltverzögerung wegen der Befüllung des Wandlers auftreten, aber auch keine Durchströmung mit Druckmittel erfolgt, weil dieses über den Bypass der Rückflussleitung nach dem Wandlergegendruckventil zugeleitet wird (Ansprüche 8 und 9).

In vorteilhafter Weise ist nach Anspruch 10 vor dem Kühler zu dessen Schutz (Verstopfung) noch ein Sicherheitsventil angeordnet und das gekühlte Druckmittel wird dem Schmiermittelkreislauf des Getriebes mit einem definierten Druck zugeleitet.

Mit der Anordnung des Pitot-Rohres im Kupplungsraum der Schaltkupplung (Anspruch 11) und der Befestigung der Rinne am Kupplungsträger ist nicht nur eine gut wirkende, sondern auch eine einfache Lösung erzielt. Infolge des im Querschnitt relativ kleinen Flüssigkeitsringes in der Rinne und der kleinen Öffnung im Pitot-Rohr ist auch der Ölverbrauch gering und kann sehr leicht aus dem Wandlerrücklauf in Verbindung mit einer Drossel oder auch aus dem Schmiermittelkreislauf entnommen werden. Durch eine am Pitot-Rohr angebrachte Abdeckung der Rinne radial nach innen kann in einfacher Weise eine Verschäumung in der Rinne verhindert werden.

Weitere Einzelheiten der Erfindung werden anhand eines Ausführungsbeispieles und anhand von Zeichnungen erläutert, wobei die Einzelheiten der Zeichnung Gegenstand der Erfindung sind.

Es zeigen:

Fig. 1 eine Steuereinrichtung für eine Wandlerschaltkupplung,

Fig. 2 ein Diagramm für den Pitot-Druck in Abhängigkeit von der Drehzahl,

Fig. 3 ein Diagramm über die Funktion des Wandlerkupplungsventiles in Abhängigkeit von der Drehzahl mit der Darstellung der Schaltpunkte,

Fig. 4 einen Halbschnitt durch die Schaltkupplung mit Pitot-Einrichtung.

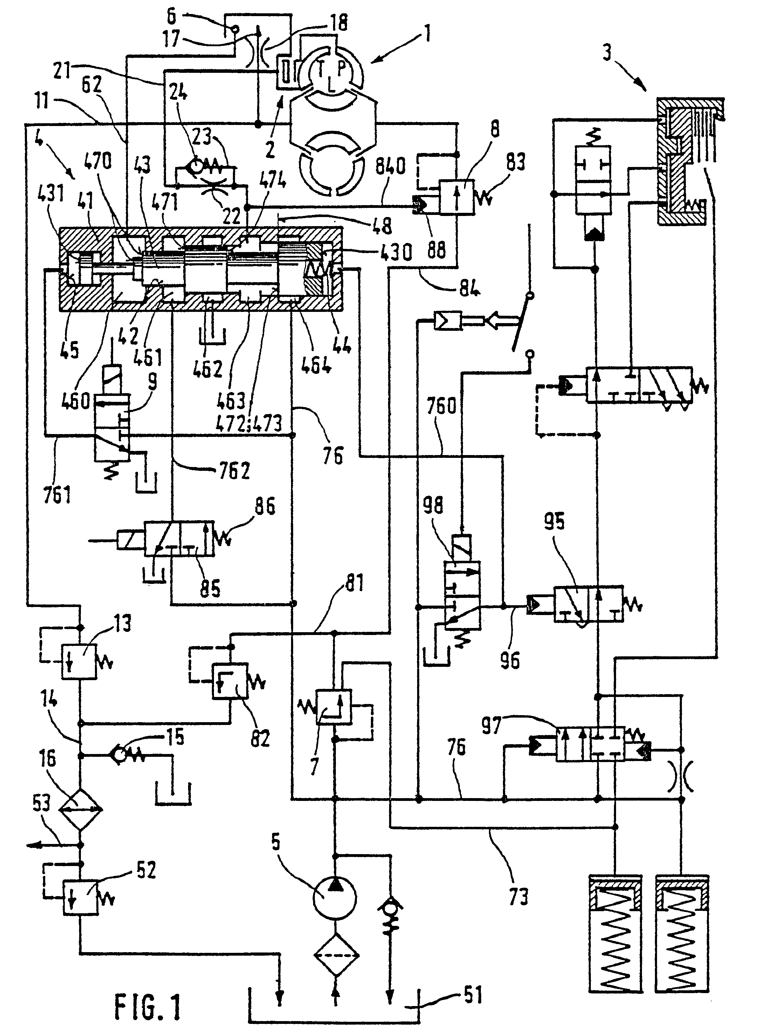

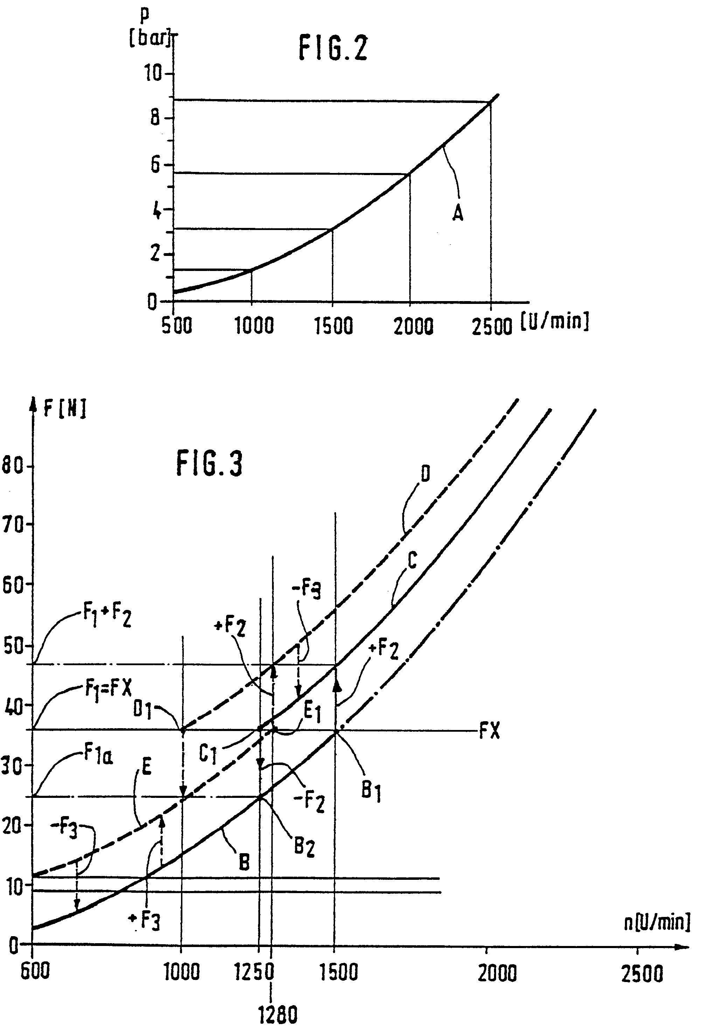

In Fig. 1 ist die gesamte Steuereinrichtung für eine Wandlerschaltkupplung mit dem Drehmomentwandler 1 der Wandlerkupplung 2 und der Schaltkupplung 3 dargestellt. Von nur einer Druckmittelpumpe 5 aus wird der Systemdruck 76 und der Kühlmitteldruck in der Kühlmittelleitung 73 über das Systemdruckventil 7 aufgebaut und der Wandler über die Leitung 84 und das Druckhalteventil 8 befüllt, wobei die Druckfeder 83 dieses Ventil in der Öffnungsstellung hält. Vom Systemdruck 76 aus wird über das geschaltete Magnetventil 98 wie auch über das Impulsventil 97 die Kraft für die Schliessung der Schaltkupplung 3 aufgebracht, wobei in der P 33 05 999.3 (Akte 5855) dieser Vorgang ausführlich beschrieben ist. Mit dem Systemdruck 76 ist auch noch

— der fünfte Ringraum 464 des Wandlerkupplungsventiles 4 direkt und der zweite Ringraum 461 dann verbunden, wenn das Gashebelschaltventil 85 in der Leerlaufstellung steht und von der Feder 86 in die Durchflussstellung gedrückt wird,

— die erste Kolbenfläche 430 über die Druckleitung 760 beaufschlagt, wenn die Schaltkupplung 3 geöffnet ist und über die Durchflussstellung des Magnetventils 98 die Steuerleitung 96 des Schaltventils 95 in die Entlüftungsstellung betätigt,

— die zweite Kolbenfläche 431 über die Druckleitung 761 beaufschlagt, wenn das Motorbremsschaltventil 9 in die Durchflussstellung zusammen mit der Betätigung der Motorbremse verstellt ist.

Der erste Ringraum 460 ist noch mit dem Pitot-Rohr 6 über die Leitung 62 und der vierte Ringraum 463 über die Leitung 21 mit der Schaltkupplung 2 verbunden, wobei in der Leitung 21 noch eine Drossel 22 mit einem Bypass 23 und ein Ventil 24 zur schnellen Entlüftung der Schaltkupplung 2 und zwischen dem Wandlerkupplungsventil 4 und der Drossel 22 der Systemdruck neben dem Schliessen der Wandlerkupplung 2 über die Leitung 840 und Betätigungseinrichtung 88 gleichzeitig das Druckhalteventil 8 abschliesst. In diesem Fall wird der Drehmomentwandler von einer Leitung 84 über einen Bypass 81 mit einem Druckbegrenzungsventil 82 zur Rückflussleitung 14, die zwischen dem Wandlergegendruckventil 13 und dem Kühler 16 angeordnet ist, überbrückt.

In der Rückflussleitung 14 zwischen Wandlergegendruckventil 13 und im Kühler 16 ist noch ein Sicherheitsventil 15 und in der Leitung 11 zwischen dem Drehmomentwandler 1 und dem Wandlergegendruckventil 13 noch eine Versorgungsleitung 17 mit einer Drossel 18 für die Ölversorgung des Pitot-Rohres 6 angeordnet, wobei diese Zuleitung auch aus dem Schmiermittelkreislauf vom Abzweig 53, der zwischen Kühler 16 und einem Schmieröldruckventil 52 liegt und das Getriebe mit Schmieröl versorgt, möglich ist. Der Rückfluss aus allen Entlüftungen und vom Schmierölkreislaufabzweig 53 erfolgt in einem gemeinsamen Ölbehälter 51.

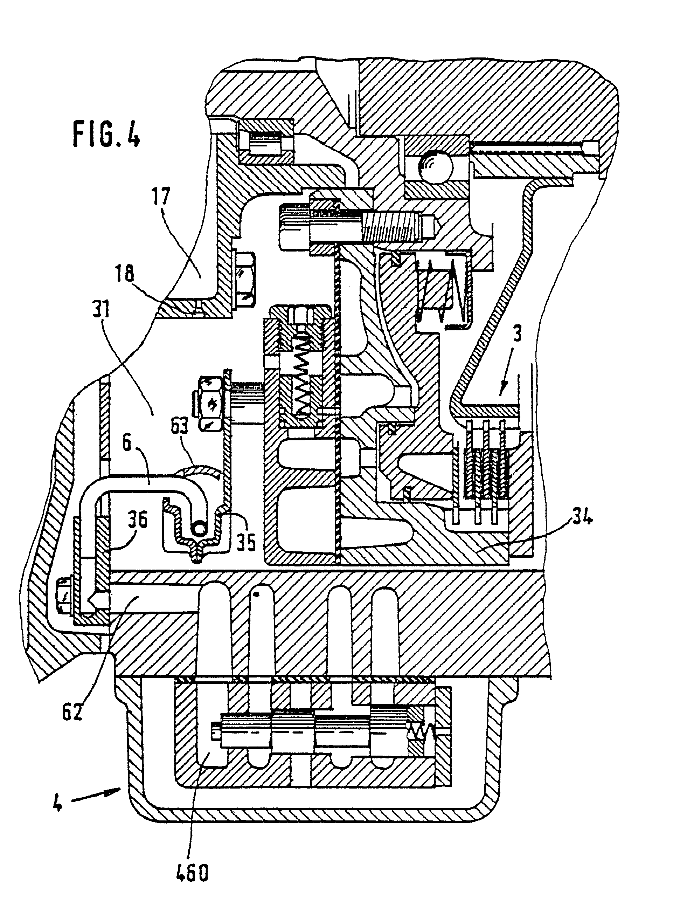

Fig. 2 zeigt in einem Diagramm mit der Kurve A den Druckanstieg des Pitotdruckes p (bar) in Abhängigkeit von der Drehzahl des Kupplungsträgers 34 (Fig. 4), der mit der Wandlerturbine verbunden ist.

In Fig. 3 ist mit B in einer Kurve die Kraft F aus der Ringfläche 470 des Kolbens 43 im ersten Ringraum 460 des Wandlerkupplungsventils 4 in Abhängigkeit vom Pitotdruck p dargestellt. In der Kurve C ist zu B noch die Kraft F2 von der dritten Ringfläche 472 im fünften Ringraum 464 und dem Systemdruck und in der Kurve D zusätzlich noch die Kraft F3 aus der zweiten Ringfläche 471 im zweiten Ringraum 461 und dem Systemdruck dazu addiert, so dass mit B und C der Zugbetrieb — voll ausgezogene Kurven — und mit D und E der Schubbetrieb — gestrichelte Kurven — dargestellt ist. Mit FX ist die im Prinzip konstante Federkraft dargestellt, wenn die Feder entsprechend lang ausgeführt ist.

In Fig. 4 ist 3 die Schaltkupplung mit dem Kupplungsträger 34, an dem in den Kupplungsraum 31 hineinragend noch eine nach radial innen offene ringförmige Rinne 35 befestigt ist, die mit Druckmittel über eine Versorgungsleitung 17 und eine Drossel 18 aus dem Wandlerkreislauf oder mit Schmiermittel aus dem Schmiermittelkreislauf befüllt wird. Von radial innen aus taucht ein feststehendes Pitotrohr 6 in diese Rinne 35 ein und liefert über die Leitung 62 einen drehzahlabhängigen Druck in den ersten Ringraum 460 (Fig. 1) des Wandlerkupplungsventils 4. Die Rinne 35 ist im Bereich des Pitotrohres noch mit einer Abdeckung 63 versehen. Die Schaltkupplung 3 und deren Betätigung ist in der P ... (Akte 5855) ausführlich beschrieben.

Die Steuereinrichtung wird anhand der Fig. 1 und 3 beschrieben und wirkt wie folgt: Mit dem Anlassen des Antriebsmotors fördert die Druckmittelpumpe 5 Druckmittel und baut den Systemdruck in der Leitung 76, den Kühl- und Schmiermitteldruck in der Leitung 73 für die Schaltkupplung 3 auf und fördert Druckmittel über das Systemdruckventil 7, die Leitung 84 und das Druckhalteventil 8 in den Drehmomentwandler 1 und von diesem über das Wandlergegendruckventil 13 und den Kühler 16 auch in das Schmiersystem des Getriebes über den Abzweig 53. Solange die Schaltkupplung 3 geöffnet ist, wird die Druckfeder 44 im Wandlerkupplungsventil 4 noch mit der Kraft aus der Kolbenfläche 430 und dem Systemdruck 76 über die Druckleitung 760 überlagert, so dass der Pitotdruck auch beim kräftigen Gasgeben und Beschleunigen der Turbine des Wandlers und des Kupplunsträgers 34 die Wandlerkupplung nicht schliessen kann. Über das Magnetventil 98 wird vom Gangschalthebel aus die Steuerleitung 96 und die Druckleitung 760 entlüftet und die Schaltkupplung 3 geschlossen (wie gezeichnet in Fig. 1). Beim erneuten Gasgeben wird das Fahrzeug über den Wandler in Gang gesetzt und mit steigender Turbinendrehzahl wächst auch der Pitotdruck an und verschiebt den Kolben 43 in Richtung Feder 44. Zum Beispiel bei 1500 U/Min. bei Punkt B1 hat der Kolben 44 mit seiner Ringfläche 472 die Steuerkante 48 erreicht. Der Systemdruck aus der Leitung 76 im fünften Ringraum 464 kann in den vierten Ringraum überfliessen und schliesst über die Drossel 22 und Leitung 21 fliessend die Wandlerkupplung 2 und über die Leitung 840 gegen den Druck der Feder 83 das Druckhalteventil 8. In der Leitung 84 und 81 baut sich unter der Wirkung des Druckbegrenzungsventiles 82 ein Vorhaltedruck auf, der die Druckmittelverluste im Wandler 1 und den Befüllungsverlust für die Pitotrohreinrichtung 6 – Leitung 17 mit Drossel 18 – über das Druckhalteventil 8 ausgleicht. Der Wandler wird nicht mehr vom Druckmittel durchströmt, sondern dieses wird vielmehr über den Bypass 81 in die Rückflussleitung 14 zum Kühler 16 geleitet. Gleichzeitig wird im Wandlerkupplungsventil 4 an der Ringfläche 472, die sich aus der gesamten Ringfläche 473 vermindert um die Ringfläche 474 ergibt, zusätzlich zur Kraft F1 aus dem Pitotdruck und der ersten Ringfläche 470 in Verbindung mit dem Systemdruck noch die Kraft F2 wirksam.

Dieser Schnappeffekt bewirkt gleichzeitig die völlige Öffnung des Wandlerkupplungsventils 4 bis zum Anschlag an der Kolbenfläche 430. Bei weiteren Drehzahlsteigerungen nach Kurve C bleibt die Wandlerkupplung 2 geschlossen. Geht die Drehzahl im Zugbetrieb jedoch zurück, z. B. am Berg, fällt die Kraft aus dem Pitotdruck auf F1A = B2 zurück, so dass bei z. B. 1250 U/Min. = Punkt C1, die Wandlerkupplung geöffnet wird. Ein erneutes Schliessen infolge eines anderen Streckenprofils oder verstärkten Gasgebens erfolgt in bekannter Weise wieder bei einer Drehzahl, z. B. 1500 U/Min., am Punkt B1.

Rollt das Fahrzeug jedoch im Leerlauf, wird zusätzlich zur Kraft aus dem Pitotrohrdruck eine Kraft F3 von Anfang an wirksam, die aus dem durch das Gashebelschaltventil 85 im zweiten Ringraum 461 zugeführten Systemdruck und der Ringfläche 471 resultiert (Kurve E), erfolgt die Schliessung der Wandlerkupplung 2 bereits bei z. B. 1280 U/Min., also am Punkt E1. Damit wird, wie bekannt, auch F2 wirksam, so dass sich im Schubbetrieb Verhältnisse nach der Kurve D ergeben. Bei Drehzahlabfall auf z. B. 1000 U/Min., Punkt D1, werden alle anliegenden Kräfte F1 + F2 + F3 von der Federkraft FX überdrückt und die Wandlerkupplung wird geöffnet. Wird jedoch z. B. bei Bergabfahrt im Leerlauf zusätzlich die Motorbremse betätigt, wirkt über das Motorbremsschaltventil 9 der Systemdruck 76 auf die zweite Kolbenfläche 431, so dass die Feder 44 bis zum Stillstand des Fahrzeuges überbrückt wird und die Wandlerkupplung geschlossen bleibt.

Ein Wechsel zwischen Zug- und Schubbetrieb ist natürlich bei jeder Drehzahl möglich, wobei bei Zug die Kurven B und C und bei Schub die Kurven E und D nach Fig. 3 relevant sind.

*Bezugszeichen*

| | |
|---|---|
| 1 | Drehmomentwandler |
| 11 | Leitung |
| 13 | Wandlergegendruckventil |
| 14 | Rückflussleitung |
| 15 | Sicherheitsventil |
| 16 | Kühler |
| 17 | Versorgungsleitung |
| 18 | Drossel |
| 2 | Wandlerkupplung |
| 21 | Leitung |
| 22 | Drossel |
| 23 | Bypass |
| 24 | Ventil |
| 3 | Schaltkupplung |
| 31 | Kupplungsraum |
| 34 | Kupplungsträger |
| 35 | Rinne |
| 36 | Gehäuse, feststehend |
| 4 | Wandlerkupplungsventil |
| 41 | Gehäuse |
| 42 | Abgesetzte Bohrung |
| 43 | Kolben |
| 430 | Erste Kolbenfläche |
| 431 | Zweite Kolbenfläche |
| 44 | Druckfeder |
| 45 | Anschlag |
| 460 | Erster Ringraum |
| 461 | Zweiter Ringraum |
| 462 | Dritter Ringraum |
| 463 | Vierter Ringraum |
| 464 | Fünfter Ringraum |
| 470 | Erste Ringfläche |
| 471 | Zweite Ringfläche |
| 472 | Dritte Ringfläche |
| 473 | Ringfläche |
| 474 | Ringfläche |
| 48 | Steuerkante |

| | |
|---|---|
| 5 | Druckmittelpumpe |
| 51 | Ölbehälter |
| 52 | Schmieröldruckventil |
| 53 | Abzweig für Schmieröl |
| 6 | Pitotrohr |
| 61 | Drehzahlabhängiger Druck |
| 62 | Leitung |
| 63 | Abdeckung |
| 7 | Systemdruckventil |
| 73 | Kühlmittelleitung |
| 76 | Systemdruckleitung |
| 760 | Druckleitung |
| 761 | Druckleitung |
| 762 | Druckleitung |
| 8 | Druckhalteventil |
| 81 | Bypass |
| 82 | Druckbegrenzungsventil |
| 83 | Druckfeder |
| 84 | Leitung |
| 840 | Leitung |
| 85 | Gashebelschaltventil |
| 86 | Druckfeder |
| 87 | Leitung |
| 88 | Betätigungsvorrichtung |
| 9 | Motorbremsschaltventil |
| 91 | Druckfeder |
| 95 | Schaltventil |
| 96 | Steuerleitung |
| 97 | Impulsventil |
| 98 | Magnetventil |
| B | Kurve, Kraft F aus Pitotdruck |
| C | Kurve, Kraft F1 aus Pitotdruck + F2 |
| E | Kurve, Kraft F1 + F3 |
| D | Kurve, Kraft F1 + F3 + F2 |
| p | Pitotdruck (in bar) |

**Patentansprüche**

1. Steuereinrichtung für eine Wandlerschaltkupplung (WSK), bestehend aus einem mit einer Wandlerkupplung (2) kombinierten, hydrodynamischen Drehmomentwandler (1) und einer Schaltkupplung (3), die in Blockbauweise mit einem Schaltgetriebe und/oder einem Antriebsmotor ausgeführt ist, wobei die Steuerung der Wandlerkupplung (2) drehzahlabhängig und die der Schaltkupplung (3) von einer Betätigungseinrichtung aus über Hilfskraft erfolgt und für beide Steuerungen noch der Fahrzustand – Zug/Schub – berücksichtigt wird, die Betätigung beider Kupplungen (2, 3) über im System selbst erzeugte Druckmittel erfolgt und zumindest das Druckmittel für den Drehmomentwandler (1) und die Verstellung der Wandlerkupplung (2) von einer Druckmittelpumpe (5), die z. B. zwischen Wandler und Schaltkupplung angeordnet ist, erzeugt wird, dadurch gekennzeichnet, dass der gesamte Druckmittelbedarf für zumindest die WSK von nur einer hydraulischen Druckmittelpumpe (5) aus erfolgt und der Systemdruck (76) zum Schliessen der Wandlerkupplung (2) dieser über ein selbsttätig wirkendes Wandlerkupplungsventil (4) zugeführt wird, welches rein hydraulisch als Auswerteventil wirkt, dem als Steuerdrücke ein von einem Pitot-Rohr (6) erzeugter, drehzahlabhängiger Druck über eine Leitung (62) und der konstante Systemdruck (76) einmal direkt und dreimal zuschaltbar zugeführt wird, wobei die Zuschaltung einmal von der Gashebelstellung (Gashebelschaltventil 85) und die beiden anderen Male von der Betätigung der Motorbremse (Motorbremsschaltventil 9) und von der Offen- oder Schliessstellung der Schaltkupplung (3, Schaltventil 95) abhängig und die Wandlerkupplung (2) während jeder Schaltung geöffnet und bei betätigter Motorbremse immer geschlossen ist und dass bei geschlossener Wandlerkupplung (2) der Wandler (1) nicht vom Druckmittel durchströmt wird.

2. Steuereinrichtung nach Anspruch 1, dadurch gekennzeichnet, dass im Gehäuse (41) des Wandlerkupplungsventils (4) in einer mehrfach abgesetzten Bohrung (42) ein mit dieser zusammenwirkender Kolben (43) angeordnet ist, der von einer Druckfeder (44) in axialer Richtung in eine Endlage (Anschlag 45) gedrückt wird und in der gleichen Richtung auf eine erste Kolbenfläche (430) der Systemdruck (Druckleitung 760) wirkt, wenn die Schaltkupplung (3) geöffnet und die Steuerleitung (96) mit der Systemdruckleitung (76) über das Magnetventil (98) verbunden ist, dem Federdruck entgegen über eine zweite Kolbenfläche (431) ein weiterer beim Einschalten der Motorbremse über ein Motorbremsschaltventil (9) zugeschalteter Systemdruck (Druckleitung 761) anliegt und im Gehäuse (41) noch mehrere Ringräume (460-464) angeordnet sind, die Steuerkanten (48) bilden und mit Ringflächen (470-472) am Kolben (43) zusammenwirken, wobei

— in einem ersten Ringraum (460) der drehzahlabhängige Druck über die Leitung (62) vom Pitot-Rohr (6) auf eine erste Ringfläche (470),

— in einem zweiten Ringraum (461) bei Leerlauf – kein Gas – der Systemdruck (Druckleitung 762) auf eine zweite Ringfläche (471) wirkt,

— ein dritter Ringraum (462) zum Ölbehälter (51) führt und bei entsprechender Kolbenstellung den vierten Ringraum (463) und die Leitung (21) und die Wandlerkupplung (2) entlüftet,

— ein fünfter Ringraum (464) immer mit dem Systemdruck (76) verbunden ist und bei entsprechender Kolbenstellung über den vierten Ringraum (463) und die Leitung (21) die Wandlerkupplung (2) schliesst und den Kolben (43) über eine dritte Ringfläche (472) in eine Haltestellung bringt, so dass beim Abfall des Pitot-Rohrdruckes die Wandlerkupplung (2) noch länger geschlossen bleibt.

3. Steuereinrichtung nach Anspruch 2, dadurch gekennzeichnet, dass in der Leitung (21) vom Wandlerkupplungsventil (4) zur Wandlerkupplung (2) eine Drossel (22) und um diese ein Bypass (23) mit einem Ventil (24) zur Schnellentlüftung des Druckraumes der Wandlerkupplung (2) angeordnet ist.

4. Steuereinrichtung nach Anspruch 2 oder 3, dadurch gekennzeichnet, dass bei geschlossener Schaltkupplung (3) die Steuerleitung (96) des Schaltventiles (95) über das Magnetventil (98) und damit die erste Kolbenfläche (430) am Wandlerkupplungsventil (4) über die Druckleitung (760) entlüftet (Fig. 1) und bei geöffneter Schaltkupplung (3) der Systemdruck (76) über das betätigte Magnetventil (98) die Steuerleitung (96) und die Druckleitung (760) auf die erste Kolbenfläche (430) des Wandlerkupplungsventils (4) zusätzlich zur Druckfeder (44) wirkt.

5. Steuereinrichtung nach einem der Ansprüche 2 bis 4, dadurch gekennzeichnet, dass das Motorbremsschaltventil (9) von einer Druckfeder (91) in der Entlüftungsstellung (Fig. 1) für die Leitung (761) und die zweite Kolbenfläche (431) des Wandlerkupplungsventiles (4) gehalten und bei Betätigung der Motorbremse umgeschaltet wird und die Systemdruckleitung (76) mit der Leitung (761) verbindet, so dass das Wandlerkupplungsventil (4) bei allen Drehzahlen die Wandlerkupplung (2) schliesst.

6. Steuereinrichtung nach einem der Ansprüche 2 bis 5, dadurch gekennzeichnet, dass das Gashebelschaltventil (85) in Leerlaufstellung von einer Druckfeder (86) in Durchflussstellung für den Systemdruck (76) gehalten wird und in der Stellung «Gasgeben» den zweiten Ringraum (461) entlüftet.

7. Steuereinrichtung nach einem der vorgenannten Ansprüche, dadurch gekennzeichnet, dass zwischen der Druckmittelpumpe (5) und dem Wandler (1) ein Systemdruckventil (7) angeordnet ist, was noch eine Kühl- und Schmiermittelleitung (73) befüllt und für diese und die Systemdruckleitung (76) als einfaches Druckbegrenzungsventil wirkt.

8. Steuereinrichtung nach einem der vorgenannten Ansprüche, dadurch gekennzeichnet, dass der Wandler (1) bei geschlossener Wandlerkupplung (2) vom Druckmittel nicht durchflossen wird, jedoch befüllt bleibt.

9. Steuereinrichtung nach Anspruch 8, dadurch gekennzeichnet, dass zwischen dem Systemdruckventil (7) und dem Wandler (1) noch ein Druckhalteventil (8) angeordnet ist, das von einer Druckfeder (83) in der Öffnungsstellung gehalten und immer mit der Wandlerkupplung (2) geschlossen wird und in der Schliessstellung den Lecköllverlust im Wandlerkreislauf ausgleicht und dass zwischen der Leitung (84) zum Druckhalteventil (8) und der Rückflussleitung (14) vom Wandlergegendruckventil (13) zum Kühler (16) noch ein Bypass (81) zur Überbrückung des Wandlers (1) mit einem Druckbegrenzungsventil (82) für die Leitung (84) angeordnet ist.

10. Steuereinrichtung nach einem der vorgenannten Ansprüche 2 bis 9, dadurch gekennzeichnet, dass in der Rückflussleitung (14) vom Wandlergegendruckventil (13) zum Kühler (16) noch ein Sicherheitsventil (15) und zwischen Kühler (16) und dem Ölbehälter (51) ein Schmieröldruckventil (52) mit einem Abzweig (53) zur Schmierölversorgung des Schaltgetriebes angeordnet ist.

11. Steuereinrichtung nach einem der vorgenannten Ansprüche, dadurch gekennzeichnet, dass das Pitot-Rohr (6) feststehend im Kupplungsraum (31) der Schaltkupplung (3) angeordnet ist und die Turbinendrehzahl des Wandlers (1) am Kupplungsträger (34) abgenommen wird.

12. Steuereinrichtung nach Anspruch 11, dadurch gekennzeichnet, dass am Kupplungsträger (34) der Schaltkupplung (3) eine nach radial innen offene ringförmige Rinne (35) angeordnet ist, die aus dem Abzweig (53) des Schmiermittelkreislaufes oder dem Wandlerkreislauf (Leitung 17) befüllt wird, wobei diese noch eine Drossel (12) aufweist und im Bereich des Pitot-Rohres (6) die Rinne (35) nach radial innen noch abgedeckt ist.

13. Steuereinrichtung nach einem der vorgenannten Ansprüche, dadurch gekennzeichnet, dass die Schaltkupplung (3) in Abhängigkeit von der Betätigung des Gangschalthebels über ein Magnetventil (98) geöffnet und geschlossen wird.

## Claims

1. A control device for a converter clutch coupling comprising a hydrodynamic torque converter (1) combined with a converter clutch/lock-up clutch (2) and a disconnect clutch (3) designed as one unit with a gear shift/gearbox mechanism and/or a drive motor, control of said converter clutch (2) being dependent on rotational speed while that of the disconnect clutch is effected by an actuating device with an auxiliary force, driving conditions—traction/thrust—being also taken into account in both controls, actuation of the two clutches (2, 3) being effected by pressure produced in the system itself, at least the pressure for the torque converter (1) and for the converter clutch (2) being produced by a pressure medium pump (5) arranged, for example, between the converter and the disconnect clutch, characterised in that the total pressure medium requirements, at least for the converter clutch coupling are produced by only one hydraulic pressure medium pump (5) m the system pressure (76) for engaging the converter clutch (2) being supplied thereto through an automatic converter clutch valve (4) which acts purely hydraulically as an analysing valve to which are fed, as control pressures, a pressure dependent on rotational speed and produced by a Pitot tube (6), through a line (62) and the constant system pressure (76), once directly and thrice connectably, the connection being made once by the position of the accelerator pedal (accelerator pedal shift valve 85) and the other two times by actuation of the motor brake (motor brake shift valve 9), and being dependent upon the disengaged or engaged position of the disconnect clutch (3, shift valve 85), said converter clutch (2) being disengaged during each shift and being always engaged when the motor brake is actuated; and in that when the converter clutch (2) is engaged, no pressure medium flows through the converter (1).

2. A control device according to claim 1, characterised in that arranged in the housing (41) of the converter clutch valve (4), in a multiple stepped hole, is a piston (43) cooperating therewith, said piston being urged axially into a terminal position (stop 45) by a compression spring (44), the system pressure provided via a pressure line (760) acting, in the same direction, upon a first piston area (430) when the disconnect clutch (3) is disengaged and the control line (6) is connected to a system pressure line (76) via the solenoid valve (98), further system pressure being applied via a further pressure line (761), against spring pressure, by a second piston area (431) when the motor brake is switched on, and a plurality of annular chambers (460-464) being also arranged in the housing (41), forming control edges (48) and cooperating with the annular areas (470-472) on the piston (43), whereby:

— in a first annular chamber (460), the r.p.m. dependent pressure acts, through a line (62) from the Pitot tube, upon a first annular area;
— in a second annular chamber (461) the system pressure (via pressure line 762) acts upon a second annular area (471) during idling — no gas;
— a third annular chamber (462) leads to an oil tank (51) and, when the piston is in the corresponding position, vents a fourth annular chamber (463), the converter clutch (2) and line 21 connected thereto;
— a fifth annular chamber (464) is always connected to the system pressure (76) and, when the piston is in the corresponding position, engages the converter clutch (2) through the fourth annular chamber (463) and the line (21), moving the piston (43) into a holding position through a third annular area (472), so that when the Pitot tube pressure drops, the converter clutch (2) remains engaged still longer.

3. A control device according to claim 2, characterized in that arranged in the line (21) from the converter clutch valve (4) to the converter clutch (2) is a restrictor (22) and, around this, a bypass (23) comprising a valve (24) for rapid venting of the pressure chamber in said converter clutch.

4. A control device according to claim 2 or 3, characterized in that when the disconnect clutch (3) is engaged, the control line (96) for the shift valve (95) is vented through the solenoid valve (98), while the first piston area (430) is vented at the converter clutch valve (4) through the pressure line (760) as shown in Fig. 1, and, when the disconnect clutch (3) disengaged, the system pressure (76) acts, through the actuated solenoid valve (98), the control line (96), and the pressure line (760), upon the first piston area (430) of the converter clutch valve (4), in addition to the compression spring (44).

5. A control device according to one of the above claims 2 to 4, characterized in that the motor brake shift valve (9) is held, by a compression spring (91), in a position (Fig. 1) to vent the line (761) and the second piston area (431) of the converter clutch valve (4), being switched over when the motor brake is operated and thereby connecting the system pressure line (76) with line (761), so that the converter clutch valve (4) is closed regardless of the rotation speed thereof.

6. A control device according to one of the above claims 2 to 5, characterized in that, in the idling position, the accelerator pedal shift valve is held, by a compression spring (86), in the throughflow position for the system pressure (76) and, in the "accelerating" position, it vents the second annular area (461).

7. A control device according to one of the above claims, characterized in that arranged by the pressure medium pump (5) and the converter (1) is a system pressure valve (7) which fills a coolant and lubricant libe (73) and acts as a simple pressure limiting valve for this and the system pressure line (76).

8. A control device according to one of the above claims, characterized in that when the converter clutch (2) is engaged, pressure medium does not flow through the converter (1), but the latter remains filled.

9. A control device according to claim 8, characterized in that arranged between a system pressure valve (7) and the converter (1) is a pressure maintaining valve (8) which is held, by a compression spring (83), in the open position, which is always closed when the converter clutch (2) is engaged and which, in the closed position, compensates for oil lost by leakage in the converter circuit; and in that arranged between a line (84) running to said pressure maintaining valve (8), and to a rereturn line (14) from a converter back pressure valve (13) to a cooler (16), is a bypass (81) which bridges the converter with a pressure limiting valve (82) for the line (84).

10. A control device according to one of the above claims 2 to 9, characterized in that arranged in the return line (14) from the converter back pressure valve (13) to the cooler (16) is a safety valve (15), and in that arranged between the said cooler and the oil tank (51) is a lubricating oil pressure valve (52) with a branch (53) which supplies lubricating oil to the gear box.

11. A control device according to one of the above claims, characterized in that the Pitot tube (6) is arranged stationarily in the clutch chamber (31) of the disconnect clutch (3), the converter turbine r.p.m. being taken from the clutch carrier (34).

12. A control device according to claim 11, characterized in that arranged at the clutch carrier (34) of the disconnect clutch (3) is an annular groove (35), which is radially open on the inside and is filled via the branch (53) of the lubricant circuit or the converter circuit (line 17), and in that it possesses a throttle valve (12) and the groove (35) is radially covered on the inside in the area of the Pitot tube (6).

13. A control device according to one of the above claims, characterized in that the disconnect clutch (3) is engaged and disengaged via a solenoid valve (98), depending on the gear shift lever movement.

## Revendications

1. Dispositif de commande pour un convertisseur-embrayage (WSK) se composant d'un convertisseur de couple (1) hydrodynamique combiné avec un embrayage de pontage du convertisseur (2) et d'un embrayage (3) de conception monobloc avec une boîte de vitesses et/ou un moteur d'entraînement, la commande de l'embrayage de pontage du convertisseur (2) dépendant du régime et la commande de l'embrayage (3) s'effectue à l'aide d'un équipement d'actionnement par l'intermédiaire de force auxiliaire et, pour les deux commandes, il est tenu compte de l'état de marche traction/poussée, et l'actionnement des deux embrayages (2, 3) s'effectuant par le moyen de pression produit automatiquement dans le système et l'agent de pression pour le convertisseur de couple (1) et le réglage de l'embrayage de pontage du convertisseur (2) et cela s'effectuant à l'aide d'une pompe hydraulique (5) qui est placée, par exemple entre le convertisseur et l'embrayage ainsi désigné, de sorte que le besoin total de l'agent de pression pour le WSK (embrayage de pontage du convertisseur) ne soit couvert que par une pompe hydraulique (5), et la pression du système (76) pour la fermeture de l'embrayage de pontage du convertisseur (2) soit alimentée par une valve d'embrayage automatique du convertisseur (4), cette valve agissant purement hydrauliquement en tant que valve de sélection et étant alimentée par une pression dépendante du régime produite en tant que pressions de commande par un tube pitot (6) à l'aide d'une conduite (62) et la pression constante du système (76), une fois directement et trois fois commutable, cependant cette commutation dépend une fois de la position de l'accélérateur (valve de commande de l'accélérateur (85)) et les deux autres fois de l'actionnement du frein-moteur (valve de commande du frein-moteur (9)) et de la position de fermeture ou d'ouverture de l'embrayage (3) (valve de commande 95), et l'embrayage du convertisseur (2) est ouvert pendant chaque commande et est toujours fermé lorsque le frein-moteur est actionné, de sorte que le convertisseur (1) n'est plus traversé par le fluide hydraulique lorsque l'embrayage de pontage du convertisseur (2) est fermé.

2. Dispositif de commande selon la revendication 1, ainsi désigné, de sorte que dans le corps (41) de la valve de l'embrayage de pontage du convertisseur (4) soit placé un piston (43) agissant avec celui-ci dans un perçage (42) plusieurs fois décalé; ce piston (43) est pressé dans le sens axial, dans une position finale (butée 45) par un ressort de pression (44) et agit dans le même sens sur une première face du piston (430) de la pression du système (conduite de pression 760), lorsque l'embrayage (3) est ouvert et que la conduite de commande (96) est reliée avec la conduite de pression du système (76), par l'intermédiaire de l'électrovalve (98); lors de l'enclenchement du frein-moteur par une valve de commande (9), la pression du système (conduite de pression 761) agit contre la pression du ressort sur une deuxième face du piston (431), et plusieurs chambres circulaires (460-464) sont situées dans le corps (41) et forment les arêtes de commande (48) et agissent ensemble avec les surfaces circulaires (470-472) sur le piston (43)

— où la pression dépendant de la vitesse de rotation agit, dans une première chambre circulaire (460), sur une première face circulaire (470) à travers la conduite (62) du tube pitot (6),

— où la pression du système (conduite de pression 762) agit, au ralenti — sans gaz — dans une deuxième chambre circulaire (461), sur une deuxième face circulaire (471),

— une troisième chambre circulaire (462) mène au réservoir d'huile (51) et désaère à la position correspondante du piston la quatrième chambre circulaire (463) et la conduite (21) et l'embrayage du convertisseur (2),

— une cinquième chambre circulaire (464) est toujours reliée avec la pression du système (76) et, à la position correspondante du piston, ferme l'embrayage du convertisseur (2) par l'intermédiaire de la quatrième chambre (463) et de la conduite (21) et amène le piston (43) dans une position d'arrêt à l'aide d'une troisième face circulaire (472), de sorte que l'embrayage du convertisseur (2) reste encore plus longtemps fermé, en cas de baisse de pression du tube pitot.

3. Dispositif de commande selon la revendication 2, ainsi désigné, de sorte que dans la conduite (21), venant de la valve d'embrayage du convertisseur (4) et allant vers l'embrayage du convertisseur (2), il soit placé un étrangleur (22) et un by-pass (23) avec une valve (24) pour le désaérage rapide de la chambre de pression de l'embrayage du convertisseur (2).

4. Dispositif de commande selon la revendication 2 ou 3, ainsi désigné, de sorte que lorsque l'embrayage (3) est fermé, la conduite de commande (96) de la valve de commande (95) soit désaérée à l'aide de l'électrovalve (98) et la première face du piston (430) sur la valve d'embrayage du convertisseur (4) soit désaérée à travers la conduite de pression (760) (figure 1), et lorsque l'embrayage (3) est ouvert, la pression du système (76) agit en plus du ressort de pression (44) sur la première face du piston (430) de la valve d'embrayage du convertisseur (4), et cela s'effectue à travers l'électrovalve actionnée (98), la conduite de commande (96) et la conduite de pression (760).

5. Dispositif de commande selon une des revendications 2 à 4, ainsi désigné, de sorte que la valve de commande du frein-moteur (9) soit maintenue, par un ressort de pression (91), dans la position de désaérage (figure 1) pour la conduite (761) et la deuxième face du piston (431) de la valve d'embrayage du convertisseur (4) et, lors de l'actionnement du frein-moteur, la valve (9) sera commutée et la conduite de pression du système (76) sera reliée à la conduite (761), de sorte que la valve d'embrayage du convertisseur (4) ferme l'embrayage du convertisseur (2) à tous les régimes.

6. Dispositif de commande selon une des revendications 2 à 5, ainsi désigné, de sorte que la valve de commande de l'accélérateur (85) soit maintenue, au ralenti, par un ressort de pression (86) dans la position de débit pour la pression du système (76) et désaère la deuxième chambre circulaire (461) dans la position «Accélérée».

7. Dispositif de commande selon une des revendications précédentes, ainsi désigné, de sorte qu'entre la pompe (5) et le convertisseur (1) il soit placé une valve de pression du système (7) qui remplit encore une conduite d'agent de lubrification et de refroidissement (73) agissant pour celle-ci et la conduite de pression du système (76) en tant que simple valve de limitation de pression.

8. Dispositif de commande selon une des revendications précédentes, ainsi désigné, de sorte que le convertisseur (1) ne soit pas traversé par le fluide sous pression, mais reste toutefois rempli, lorsque l'embrayage du convertisseur (2) est fermé.

9. Dispositif de commande selon la revendication 8, ainsi désigné, de sorte qu'il soit placé une autre valve de retenue de pression (8) entre la valve de pression du système (7) et le convertisseur (1), et que cette valve (8), maintenue dans la position d'ouverture par un ressort de pression (83), soit toujours fermée avec l'embrayage du convertisseur (2) et compense la perte d'huile de fuite dans le circuit du convertisseur à la position de fermeture et qu'entre la conduite (84) vers la valve de retenue de pression (8) et la conduite de retour (14) de la valve de contre-pression du convertisseur (13) allant au réfrigérant (16) il soit encore monté un by-pass (81) pour le pontage du convertisseur (1) avec une valve de limitation de pression (82) pour la conduite (84).

10. Dispositif de commande selon une des revendications précédentes 2 à 9, ainsi désigné, de sorte que dans la conduite de retour (14) de la valve de contre-pression du convertisseur (13) au réfrigérant (16), il soit monté une valve de sécurité (15) et entre le réfrigérant (16) et le réservoir d'huile (51) une valve de pression d'huile (52) avec une déviation (53) pour l'alimentation en huile de lubrification de la boîte de vitesses.

11. Dispositif de commande selon une des revendications précédentes, ainsi désigné, de sorte que le tube pitot (6) soit placé de façon fixe dans la chambre d'embrayage (31) de l'embrayage (3) et que la vitesse de rotation de la turbine du convertisseur (1) soit prise sur le support d'embrayage (34).

12. Dispositif de commande selon la revendication 11, ainsi désigné, de sorte que sur le support d'embrayage (34) de l'embrayage (3), on ait un conduit (35) circulaire ouvert vers l'intérieur radial, qui soit rempli à partir de la déviation (53) du circuit du fluide de lubrification ou du circuit du convertisseur (conduite 17), auquel cas cette conduite sera munie d'un étrangleur (12) et, dans la zone du tube pitot (6), le conduit (35) sera encore recouvert radialement vers l'intérieur.

13. Dispositif de commande selon une des revendications précédentes, ainsi désigné, de sorte que l'embrayage (3) soit ouvert et fermé par l'intermédiaire d'une électrovalve (98), en fonction de l'actionnement du levier de changement de vitesse.

FIG.1

FIG.2

FIG.3

**FIG. 4**